# EUROPÄISCHE PATENTSCHRIFT

(11) **EP 2 572 851 B1**
(45) Veröffentlichungstag und Bekanntmachung des Hinweises auf die Patenterteilung: **12.07.2017**
(21) Anmeldenummer: 12003997.9
(22) Anmeldetag: 22.05.2012
(51) Int. Cl.: B29B 7/74, B29C 67/24

(54) **Verfahren zum Herstellen von, insbesondere faserverstärkten, thermoplastischen Kunststoffteilen**
Method for producing plastic parts, in particular fibre-reinforced thermoplastic plastic parts
Procédé de fabrication en particulier de pièces en matière synthétique thermoplastiques renforcées par des fibres

(30) Priorität: 09.08.2011 AT 8502011
(43) Veröffentlichungstag der Anmeldung: 27.03.2013
(73) Patentinhaber: ENGEL AUSTRIA GmbH, 4311 Schwertberg (AT)
(72) Erfinder: Steinbichler, Georg, 8786 Rottenmann (AT); Baeck, Gerhard, 4311 Schwertberg (AT); Egger, Peter, 4320 Perg (AT)
(74) Vertreter: Torggler & Hofinger Patentanwälte

(56) Entgegenhaltungen:
- WO-A2-03/018287
- JP-A- 58 059 817
- US-B1- 6 254 813

## Beschreibung

Die Erfindung betrifft ein Verfahren zum Herstellen von, insbesondere faserverstärkten, thermoplastischen Kunststoffteilen in einer Spritzgießmaschine, wobei das Verfahren das Zusammenführen eines polymeren Vorprodukts, eines Aktivators und eines Katalysators beinhaltet.

Derartige Verfahren sind schon seit vielen Jahren bekannt, wobei diese als Insitu-Verfahren oder als RTM-Verfahren (Resin Transfer Moulding) bekannt sind. Die Grundidee dahinter liegt in dem Vermengen von polymeren Vorprodukten (auch Kunststoffrohkomponenten, Prepolymere, Ausgangskunststoff oder ähnlich genannt) mit Aktivatoren und Katalysatoren in einem Plastifizierzylinder (oder auch in einem Extruder), wobei dann beim Einspritzen der sehr dünnflüssigen Masse Gewirke, Gewebe oder Ähnliches sehr leicht durchflossen werden und dadurch sehr widerstandsfähige Verbunde bzw. Kunststoffteile entstehen. Weiters lassen sich dadurch Kunststoffteile mit sehr dünnen Wandstärken herstellen, die mit konventionellen Kunststoffen nicht machbar wären. Der Vorteil bei der Herstellung dieser thermoplastischen Kunststoffteile gegenüber der Herstellung von Duroplasten bzw. Epoxidharz liegt vor allem in der kürzeren Aushärtezeit, in der hohen Schlagzähigkeit, in den vielfältigen Anwendungsgebieten und in der besseren Wiederverwer tbarkeit.

Gegenwärtig werden anionisch polymerisierbare Polymere wie beispielsweise PA6, PA12, PBT im industriellen Maßstab auf Reaktivanlagen zu Gusspolyamid bzw. PBT verarbeitet, die schematisch im Standardwerk Domininghaus, Kunststoffe, 7. Auflage, Springer Verlag beschrieben sind. Die Ausgangsstoffe liegen in flüssiger Form in beheizten Behältern vor und werden über Präzisionspumpen in einen Mischkopf gefördert. Häufig zirkulieren auch beide Komponenten im Kreislauf zum Mischkopf und dieser entnimmt nur während der Dosierphase aus beiden Kreisläufen Material, mischt es in einer Dosierkammer und trägt es anschließend aus. Bei diesem Verfahren sind die beiden Ausgangsstoffe für längere Zeit auf hoher Temperatur, was einerseits Einschränkungen hinsichtlich der verwendbaren Rohstoffe ergibt und andererseits die Reaktivität im Laufe der Zeit abnehmen lässt. Zudem sind Materialumstellungen zeitaufwändig und mit vergleichsweise großen Abfallmengen verbunden. Bei herkömmlichen Reaktivanlagen zirkulieren die beiden Komponenten (z.B. Polyol und Isocyanat) auf konstantem Druckniveau. Für das Injizieren in die Form werden die beiden Schmelzeströme im Mischkopf vereinigt und in das Werkzeug umgelenkt. Typischerweise wird mit konstanter Geschwindigkeit injiziert.

Im gattungsfremden Stand der Technik wird in der EP 1 415 793 A1 eine beheizte Plastifiziereinheit mit Zwischenpuffer beschrieben und ein waagrecht angeordnetes Schneckensystem gezeigt. Letzteres ist in dieser Anordnung nicht geeignet, extrem dünnflüssiges Caprolactam oder andere Ausgangssubstanzen für den Reaktivspritzguss zu plastifizieren, da diese sehr leichtfließenden Materialien zwischen Schneckensteg und Massezylinder Richtung Einzugszone rinnen und dort mit dem Granulat verklumpen. Für reaktive Systeme ist ein Reservoir in Kombination mit einem Kolbenaustragssystem aufgrund möglicher Polymerisation im Reservoir bzw. Kolbenvorraum nur bedingt tauglich.

Ganz ähnliche Nachteile gelten auch für die ebenfalls gattungsfremden WO 03/018287 A2 und US 6,254,813 B1, wobei darin nur das Vermischen von bereits polymerisierten Aufgangsprodukten gezeigt ist.

Einen ähnlichen Ansatz verfolgt die WO 02/18120 A2, wobei hier von einer horizontal angeordneten Plastifiziereinheit direkt mit einem Austragskolben Schmelze in das Werkzeug befördert wird.

Die WO 2011/006648 A1 beschreibt ein Spritzaggregat in vertikaler Anordnung mit Rückstromsperre und anschließender Zugabe einer zweiten Komponente. Nachteilig bei dieser Variante ist die relativ große Bauhöhe. Zudem muss auch bei dieser Variante ein zugeführter Aktivator oder Katalysator ständig sozusagen "am Köcheln" gehalten werden.

Dagegen zeigt die DE 2 017 512 ein Verfahren zur Herstellung von Polyamidformteilen durch aktivierte anionische Polymerisation von Lactamen.

Die Aufgabe der vorliegenden Erfindung besteht daher darin, ein gegenüber dem Stand der Technik verbessertes Verfahren zum Herstellen von thermoplastischen Kunststoffteilen anzugeben. Insbesondere soll die Spritzgießmaschine möglichst effizient betrieben und flexibel genutzt werden, wobei auch möglichst wenig Energie für das Aufschmelzen und Bereitstellen der Grundkomponenten nötig sein soll.

Dies wird für ein Verfahren mit den Merkmalen von Anspruch 1 gelöst. Demnach ist erfindungsgemäß vorgesehen, dass die Spritzgießmaschine eine erste Plastifizierschnecke und eine zweite Plastifizierschnecke, die jeweils in einem Plastifizierzylinder angeordnet sind, aufweist, wobei mit der ersten Plastifizierschnecke das polymere Vorprodukt und der Aktivator ohne Hinzufügen des Katalysators vermischt und im Wesentlichen verflüssigt werden und mit der zweiten Plastifizierschnecke das polymere Vorprodukt und der Katalysator ohne Hinzufügen des Aktivators vermischt und im Wesentlichen verflüssigt werden, wonach die mit den beiden Plastifizierschnecken verflüssigten Inhalte vermischt und gemeinsam in eine Spritzgießform eingebracht werden und im Wesentlichen erst dort zum Kunststoffteil polymerisieren, wobei die Vermischung der Inhalte in einer in der Spritzgießform angeordneten Mischkammer durchgeführt wird. Somit können die für die Polymerisation benötigten Komponenten immer gezielt und nur dann, wenn sie benötigt werden, aufgeschmolzen und vermischt werden, sodass kein ständiges Bereithalten von bereits verflüssigter und teilweiser gemischter Komponenten benötigt wird. Weiters ist von Vorteil, dass die zugeführten Aktivatoren bzw. Katalysatoren jeweils im Plastifizierzylinder auf einer Temperatur gehalten werden, in der sie sich gerade verflüssigen, aber noch keine bzw. eine sehr geringe und unbedeutende Polymerisation auslösen. "Im Wesentlichen verflüssigt" heißt, dass der Großteil der eingefügten Komponenten bereits im Plastifizierzylinder in den flüssigen Aggregatszustand übergegangen ist, jedoch kann ein kleiner Teil (unter 5%) der Komponenten auch erst später in einen flüssigen Zustand übergehen. Dass die zusammengeführten Inhalte "im Wesentlichen erst" in der Spritzgießform polymerisieren, bedeutet, dass durch die Aktivatoren bzw. Katalysatoren sehr wohl bereits vor der Spritzgießform die ersten Initiationsschritte für eine vollständige Polymerisation ausgelöst werden können, jedoch erfolgen die wesentlichen Schritte der Polymerisation (Geleffekt und Glaseffekt) erst in der Spritzgießform.

In die Mischkammer können die Inhalte durch einen flexiblen Schlauch von den Spritzaggregaten zugeführt werden. Es ist aber auch möglich, dass die Spritzaggregate über einen statischen Spritzkanal mit der Spritzgießform in Verbindung stehen.

Um auf Einspritzpumpen oder sonstige Druckmittel verzichten zu können, kann bevorzugt vorgesehen sein, dass das Einbringen des polymeren Vorprodukts samt Katalysator und Aktivator in die Spritzgießform durch Vorschub beider Plastifizierschnecken durchgeführt wird. Dabei können die Schneckenvorlaufgeschwindigkeiten synchronisiert werden (Achskopplung). Zudem kann ein Einspritzprofil zur Anpassung an die Werkzeuggeometrie gefahren werden, was bei Pumpen mit konstantem Druck nicht bzw. nur recht aufwändig möglich ist.

Die Zugabe des Aktivators bzw. Katalysators kann direkt in den Massezylinder (Hochdruckeinspritzung) erfolgen, um schlecht zu reinigende statische Mischsysteme stromabwärts zu vermeiden. Bevorzugt ist allerdings vorgesehen, dass der Aktivator dem polymeren Vorprodukt vor dem Einfüllen zur ersten Plastifizierschnecke zugegeben wird und dass der Katalysator dem polymeren Vorprodukt vor dem Einfüllen zur zweiten Plastifizierschnecke zugegeben wird. Das Aufdosieren in den einzelnen Plastifizierzylindern kann dabei für einen einzigen Einspritzvorgang erfolgen. Es ist aber auch möglich, mehrere sukzessive Einspritzvorgänge ohne zusätzliches Aufdosieren durchzuführen. Optional können auch zwangsschließende Sperren oder Verschlussdüsen zwischen Schubschnecke und Mischkopf vorgesehen sein.

Grundsätzlich können die polymeren Vorprodukte Monomere oder Oligomere sein. Besonders bevorzugt ist dabei vorgesehen, dass als polymeres Vorprodukt ε-Caprolactam und/oder Laurinlactam oder zyklisches Butylenterephthalat verwendet wird.

Mit Caprolactam wird ein thermoplastisches Kunststoffteil aus Polyamid 6 hergestellt. Als Aktivator kann dabei ein aliphatisches Polyisocyanat oder ein blockiertes Diisocyanat verwendet werden. Als Katalysator können bei der Herstellung von Polyamid 6 Metalllactamate aus Natrium, Kalium oder Brommagnesium verwendet werden. Bevorzugt wird Natriumcaprolactamat verwendet. Die Aktivatoren haben einen Gewichtsprozentanteil von 0,09 bis 0,45 % und die Katalysatoren haben einen Gewichtsprozentanteil von 0,17 bis 0,51 % Wirksubstanz an der gesamten einzuspritzenden Masse.

Mit Laurinlactam als polymeres Vorprodukt wird ein Polyamid 12 hergestellt. Als Katalysatoren können dabei Natriumlactamat, Alkalilaurinlactamate oder Natriumcaprolactamat (C10) verwendet werden. Mögliche Aktivatoren bei der Herstellung von Polyamid 12 sind Carbodiimide, N-Acyl-Laurinlactamen, blockierte oder nicht blockierte Isocyanate (C20). Der gemeinsame Anteil der Aktivatoren und Katalysatoren beträgt bei der Herstellung von Polyamid 12 ca. 0,4 Gew.% (Aktivator und Katalysator enthalten beide knapp 20 % an Wirkzubstanz, daher entsprechen die 0,4 Gew.% 2 % Zugabe von Aktivator und Katalysator vorgelegt in Caprolactam. Des Weiteren kann Laurinlactam copolymerisiert werden mit ε-Caprolactam, Styrol und ε-Caprolacton.

Zyklisches Butylenterephthalat dient als Ausgangskunststoff bzw. polymeres Vorprodukt für ein Kunststoffteil aus Polybutylenterephthalat (PBT). Mit einem Katalysator/Aktivator und bei entsprechender Temperatur erfolgt dann die Polymerisation. Als Katalysator mit 0,45 Gewichtsprozent Zugabemenge kann beispielsweise der Zinn-basierte, durch Umesterung entstandene Katalysator Fascate 4101 von Arkema mit der Summenformel BuSnCl(OH)2 verwendet werden.

Besonders bevorzugt kann vorgesehen sein, dass in der Spritzgießform vor dem Einspritzen eine zu umspritzende Komponente, vorzugsweise ein textiles Flächengebilde oder Ähnliches, angeordnet wird, welche nach dem Einspritzen und dem Polymerisieren des eingespritzten polymeren Vorprodukts samt Aktivator und Katalysator ein faserverstärktes Kunststoffteil mitbildet. Das textile Flächengebilde bzw. Fasergebilde kann beispielsweise durch Gestricke, Gewirke, Langfasern, Endlosfasern, Glasfasern, Kohlenstofffasern, Aramidfasern, Matten, Gelegen, Geflechten, Geweben oder Vliesen gebildet werden.

Gemäß einem bevorzugten Ausführungsbeispiel der Erfindung ist auch die Verarbeitung von temperaturempfindlichen Additiven wie Naturfasern möglich. Die, vorzugsweise löslichen oder einen mischkopfgängigen Maximaldurchmesser aufwesenden, Zuschlagstoffe werden entweder über die Haupteinfüllöffnung der Massezylinder zugegeben oder in die Form in Form von Verstärkungsstrukturen wie beispielsweise Gelegen, Gewirken, Gestricken oder Wirrfasermatten eingelegt. Alternativ könne man beispielsweise größere Füllstoffe mit Stopfwerk oder Endlosrovinge zwischen Mischkopf und Form zugeben. Im Thermoplastspritzguss werden Materialien typischerweise deutlich oberhalb der Schmelztemperatur (ca. 20-100°C höher) verarbeitet. Dies schränkt den Einsatz der thermisch empfindlichen Naturfasermaterialien (z.B. Holzfaser, Regeneratcellulose, Hanf, Flachs, Jute, Sisal, ..) auf niedrig schmelzende Matrixwerkstoffe ein. Letztere weisen auch niedrige Dauergebrauchstemperaturen auf. Mittels Reaktivspritzguss können mittels anionischer Polymerisation beispielsweise PA6 bei 160°C polymerisiert werden. Dies liegt noch deutlich unterhalb der Zersetzungstemperaturen des Naturfaserbestandteiles Lignin.

Eine Spritzgießmaschine zur Durchführung des beschriebenen Verfahrens umfasst eine erste Plastifizierschnecke zum Verflüssigen und Vermischen eines polymeren Vorprodukts mit einem Aktivator, eine zweite Plastifizierschnecke zum Verflüssigen und Vermischen eines polymeren Vorprodukts mit einem Katalysator, eine Mischkammer zum Vermischen der mit den beiden Plastifizierschnecken verflüssigten Inhalte und eine Spritzgießform, in der die in der Mischkammer vermischten Inhalte gemeinsam einbringbar und polymerisierbar sind, wobei die Mischkammer in der Spritzgießform angeordnet ist. Bevorzugt ist weiters eine Steuer- oder Regeleinheit mit einem Datenspeicher vorgesehen, wobei im Datenspeicher Einspritzprofile bzw. Verfahrensschritte zum Durchführen des Verfahrens nach einem der Ansprüche 1 bis 7 hinterlegt sind.

Ein großer Vorteil einer solchen Spritzgießmaschine gegenüber einer herkömmlichen Reaktivanlage besteht darin, dass die eingeführten Komponenten keiner Rezirkulation unterliegen. Zusätzlich wird das rasche Ansprechen von den vorzugsweise elektrischen Spritzaggregaten ausgenutzt. Ein weiterer Vorteil besteht in der Möglichkeit zur Achssynchronisierung und/oder im Fahren eines Einspritzprofils. Bevorzugt kann diesbezüglich vorgesehen sein, dass zwischen den Plastifizierschnecken und der Mischkammer jeweils Zuführleitungen für die verflüssigten Inhalte angeordnet sind, wobei Messsensoren den Druck in den Zuführleitungen messen und ein entsprechendes Signal der Steuer- oder Regeleinheit zuführbar ist. Besonders bevorzugt kann vorgesehen sein, dass von der Steuer- oder Regeleinheit die Spritzgießmaschine in Abhängigkeit der gespeicherten Einspritzprofile bzw. Verfahrensschritte und/oder der von den Messsensoren eingeführten Signale steuer- oder regelbar ist. Dies ergibt eine nach den Wünschen des Anwenders eingerichtete Steuerung bzw. Regelung der Schubschneckenvorlaufgeschwindigkeit in Abhängigkeit vom Drucksignal in der Schmelzeleitung zwischen Schneckenende und Mischvorrichtung bzw. in Abhängigkeit der hinterlegten Einspritzprofile.

Bei der Regelung kann auch vorgesehen sein, dass eine Ansteuerung der optionalen Verschlussdüsen in Abhängigkeit vom Druckniveau im Schneckenvorraum bzw. im Mischkopf erfolgt. Es kann auch eine Differenzmessung vorgesehen sein, wodurch das Öffnen erst bei Mindestdruckniveau und das Schließen nach getaner Arbeit erfolgt. Es kann auch eine Koppelung mit Drucksignalen aus dem Formwerkzeug vorhanden sein.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: schematisch eine Spritzgießmaschine mit Schließeinheit und Plastifiziereinheit,
- Fig. 2: Details der beiden Spritzaggregate,
- Fig. 3: Details der Spritzaggregate mit der Steuer- oder Regeleinheit und
- Fig. 4: unterschiedlich schräg gestellte Spritzaggregate mit Mischkopf außerhalb des Werkzeuges.

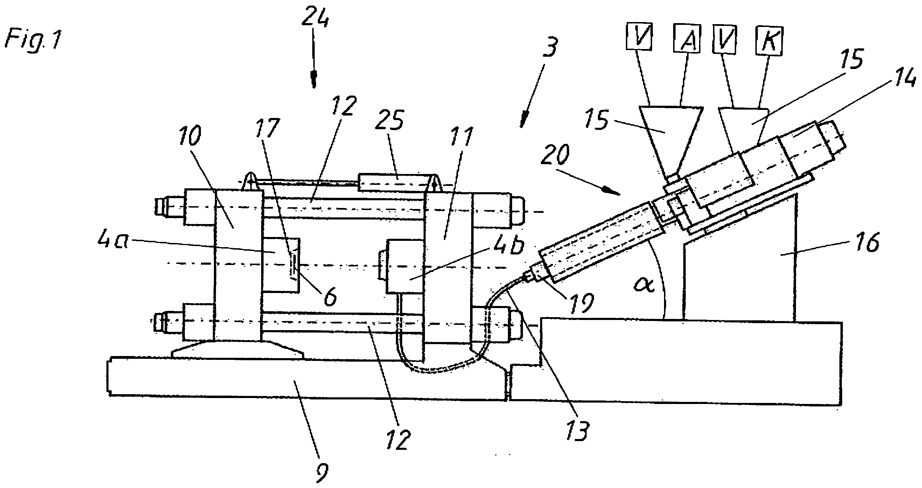

Fig. 1 zeigt eine Spritzgießmaschine 3, bestehend aus einer Schließeinheit 24 und einer Plastifiziereinheit 20, die beide auf einem Rahmen 9 angeordnet sind. Die Schließeinheit 24 weist eine feste Formaufspannplatte 11, eine bewegbare Formaufspannplatte 10, Holme 12, die Formhälften 4a und 4b einer Spritzgießform 4 und eine Bewegungsvorrichtung 25 für die bewegbare Formaufspannplatte 10 auf. Die Spritzaggregate der Plastifiziereinheit 20 sind über eine Aggregathalterung 16 mit dem Rahmen 9 verbunden und in einem Winkel α von - in diesem Fall - 25° gegenüber der Horizontalen geneigt. Aufgrund der Darstellung in Fig. 1 ist nur ein Plastifizier- bzw. Spritzaggregat ersichtlich, vom dahinter liegenden Spritzaggregat ist nur der Einfülltrichter 15 und die schematisch dargestellte Einbringung des polymeren Vorprodukts V und des Katalysators K angedeutet. Über die Einspritzdüse 19 und die Zuführleitung 13 gelangen die vermengten und verflüssigten Inhalte VA bzw. VK in die Spritzgießform 4 und können dort durch Umspritzen der zu umspritzenden Komponente 6 nach der Polymerisation ein faserverstärktes Kunststoffteil bilden. Um ein möglichst einfaches Einlegen der Verstärkungsstrukturen bzw. Einlegeteile zu ermöglichen, kann die Spritzgießform 4 auch in einer vertikal bewegbaren Schließeinheit 24 angeordnet sein.

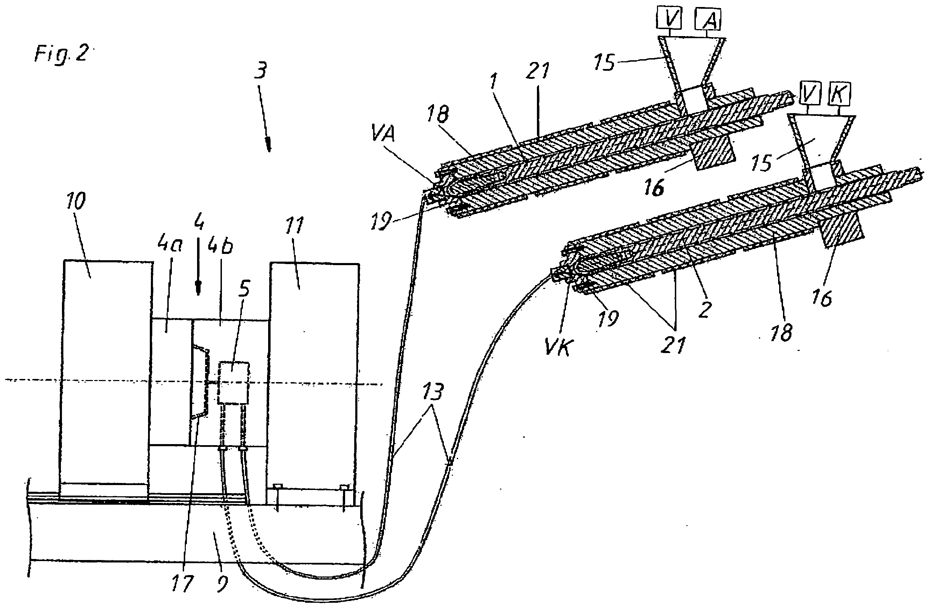

In Fig. 2 ist die Schließeinheit 24 in geschlossener Stellung gezeigt, wodurch die Kavität 17 in der Spritzgießform 4 gebildet ist. In einer Formhälfte 4b der Spritzgießform 4 ist die Mischkammer 5 ausgebildet, in die die beiden Zuführleitungen 13 der beiden Spritzaggregate führen. In das Spritzaggregat mit der Plastifizierschnecke 1 wird über den Einfülltrichter 15 ein polymeres Vorprodukt V und ein Aktivator A eingebracht und gemeinsam im Plastifzierzylinder 18 von der Plastifizierschnecke 1 verflüssigt. Der Plastifizierzylinder 18 ist von Heizbändern 21 umgeben. Im vorderen Bereich der Plastifizierschnecke 1 gelangt der verflüssigte Inhalt VA in den Bereich der Einspritzdüse 19. Von dort ist dieses Spritzaggregat über die Zuführleitung 13 mit der Mischkammer 5 verbunden. In die Mischkammer 5 kann auch ein Reinigungsstößel eingefahren werden, der die Mischkammer 5 nach erfolgter Mischung und Einspritzung reinigt, sodass dort durch zurückgebliebene Rückstände keine Polymerisation eintritt, wodurch die Mischkammer 5 sonst verstopfen könnte.

In das Spritzaggregat mit der Plastifizierschnecke 2 wird über den Einfülltrichter ein polymeres Vorprodukt V und der Katalysator K eingebracht, gemeinsam mittels der Plastifizierschnecke 2 verflüssigt und als verflüssigter Inhalt VK über die Zuführleitung 13 ebenfalls in die Mischkammer 5 gebracht. Die beiden Zuführleitungen 13 sind als flexible, beheizte Schläuche ausgebildet. Die Inhalte VA bzw. VK gelangen über die leicht steigende Anordnung der Schläuche (Zuführleitung 13) in die zu füllende Mischkammer 5. Die Mischung kann dabei bevorzugt derart erfolgen, dass die an den Enden der Zuführleitung 13 angeordneten Mischdüsen - im Gegensatz zur Darstellung - direkt aufeinander gerichtet sind und somit eine turbulente Durchmischung der Inhalte VA und VK gegeben ist. Alternativ könnte eine Mischkammer 5 mit Rührwerk verwendet werden, welche aber den Nachteil des erhöhten Reinigungsaufwandes und höherer Abfallmengen mit sich bringt.

In den Spritzaggregaten werden die eingeführten Inhalte bei der Herstellung von Polyamid 6 auf bis zu 120°C erwärmt. In der Spritzgießform 4 dagegen herrscht bei der Herstellung von Polyamid 6 eine Temperatur von ca. 160°C. Beim Zusammensprühen der einzelnen Inhalte VK und VA durch zwei, vorzugsweise gebohrte, Löcher mit ca. 0,6 mm Durchmesser oder durch zwei Breitschlitzdüsen werden beispielsweise 10 cm³ pro Plastifizierschnecke 1 bzw. 2 pro Sekunde in die Mischkammer 5 gefüllt. Wenn diese Füllung ca. 10 Sekunden erfolgt, gelangen 200 cm³ an zu polymerisierendem Material in die Mischkammer 5 und unmittelbar weiter in die Kavität 17 in der Spritzgießform 4. Die Mischkammer 5 kann zylindrisch ausgebildet sein und einen Durchmesser von 10 mm und eine Länge von 50 mm aufweisen. Die Inhalte VA und VK sind für weniger als eine Sekunde, bevorzugt für ca. 0,2 Sekunden, in der Mischkammer 5. Danach gelangen sie unmittelbar in die Spritzgießform 4 und polymerisieren dort in ca. 2 bis 10 Minuten aus. Durch das Polymerisieren bei ca. 160°C ist kein Herunterkühlen der Formhälften 4a und 4b von 250°C auf Entformungstemperatur notwendig. Dadurch ist eine besondere Energieeffizienz gegeben, da die Spritzgießform 4 nur einmal aufgewärmt werden muss und dann bei konstanter Temperatur gehalten werden kann. Zudem liegt keine Schädigung der Additive, wie sie sonst bei ca. 250°C zu befürchten ist, vor. Ein weiterer Vorteil liegt bei den geringen Drücken (maximal 100 bar vor Eintritt in die Mischkammer 5) und im geringen Drehmomentbedarf der Plastifizieraggregate. Da durch die geringen Drücke auch keine bzw. nur eine geringe Verschiebung von eingebrachten Komponenten 6 (Verstärkungsfasern) oder eine Zerstörung eines Gewebes zu befürchten ist, ist durch die hier vorliegende Erfindung eine wesentliche Verbesserung für den großserienfähigen Leichtbau gegeben. Zu der besseren Energieeffizienz trägt auch der geringe Schließkraftbedarf bei. Z.B. liegt bei der Kunststoffteilherstellung mit Caprolactam der Forminnendruck bei ca.0,7 bar.

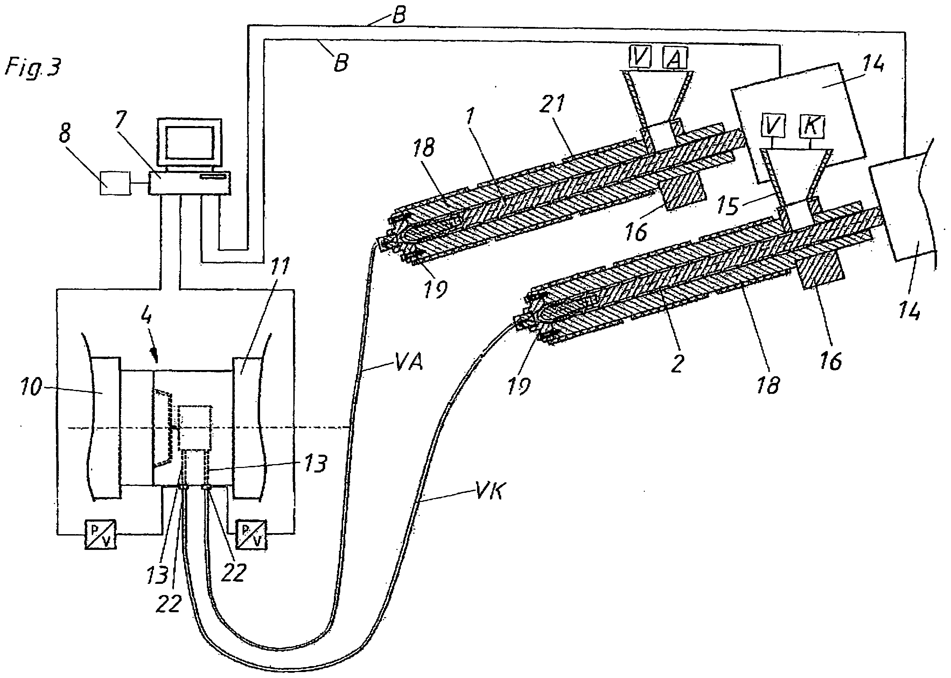

In Fig. 3 ist zusätzlich zur Fig. 2 auch die Steuer- oder Regeleinheit 7 mitsamt dem Datenspeicher 8 dargestellt. In der Zuführleitung 13 sind jeweils Messsensoren 22 angeordnet, die ein Drucksignal P/V an die Steuer- oder Regeleinheit 7 übermitteln. Zusätzlich sind im Datenspeicher 8 z.B. Einspritzprofile oder sonstige Verfahrensschritte hinterlegt. Über die Steuer- oder Regeleinheit 7 werden in Abhängigkeit der zugeführten Signale bzw. hinterlegten Daten im Datenspeicher 8 Befehle B an die Antriebseinheiten 14 der beiden Spritzaggregate ausgegeben. Somit wird eine exakte Steuerung und Einspritzung und somit gezielte Herstellung von Kunststoffteilen ermöglicht.

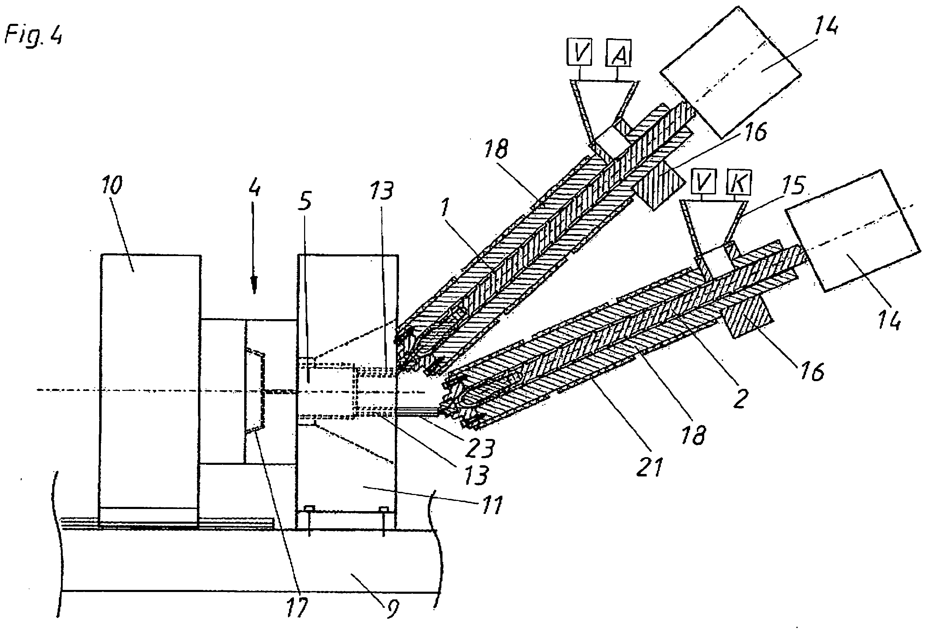

In Fig. 4 ist eine Y-förmige Anordnung der Spritzaggregate gezeigt, um möglichst kurze Schmelzwege zu erzielen, da die Einspritzdüsen 19 direkt in die starren, teilweise in der bewegbaren Formaufspannplatte 11 ausgebildeten, Zuführleitungen 13 münden. Diese Zuführleitungen 13 können von einem Heizelement 23 umgeben sein.

Besonders bevorzugt kann gemäß der vorliegenden Erfindung vorgesehen sein, dass beide Plastifizierschnecken 1, 2 in einem Winkel α zwischen 7° und 50°, vorzugsweise zwischen 10° und 35°, gegenüber der Horizontalen geneigt sind. Dadurch, dass die mindestens zwei Spritzaggregate in einem Winkel zur Horizontalen geneigt sind, kann zum einen eine möglichst geringe Bauhöhe garantiert werden. Zum anderen fließt durch die Neigung das aufgeschmolzene und sehr dünnflüssige Material (z.B. 4 mPa·s bei Caprolactam) nicht zwischen den Schneckenstegen und dem Plastifizierzylinder 18 retour. Verklumpungen mit dem eingefüllten Granulat bzw. das Bilden eines Caprolactam-Schmelzesees, der weit in das Granulatbeet hineinreicht und dort zu Verklumpungen führt, werden vermieden. Bezüglich der Schrägstellung können die einzelnen Spritzaggregate in gleicher Winkelstellung oder auch in zueinander unterschiedlicher Winkelstellung (siehe Fig. 4) stehen.

Grundsätzlich soll natürlich nicht ausgeschlossen sein, dass mehr als zwei Spritzaggregate vorgesehen sind. Dabei könnte beispielsweise in einem dritten Spritzaggregat das reine polymere Vorprodukt V aufgeschmolzen werden, während in den zwei anderen Aggregaten einerseits das polymere Vorprodukt V und der Aktivator A und andererseits das polymere Vorprodukt V und der Katalysator K verflüssigt werden. Diese drei verflüssigten Inhalte VA, VK und V können dann erst in einer Mischkammer 5 zusammengeführt werden. Diesbezüglich sei auch erwähnt, dass eine Mischkammer 5 nicht unbedingt vorgesehen sein muss. Vielmehr kann die Vermischung der einzelnen Inhalte VA und VK auch erst in der Kavität 17 bzw. in dessen Zuführkanal erfolgen.

Bevorzugt kann weiters vorgesehen sein, dass im Bereich der Einfülltrichter 15 Inertgas oder Stickstoff zugeführt wird. Dadurch kann die Feuchtigkeit ferngehalten werden. Für das Einfüllen der Komponenten in den Einfülltrichter 15 bzw. direkt in den Schneckenhohlraum in der Plastifizierschnecke 18 können herkömmliche Zuführvorrichtungen für die granulatförmigen oder teilweise bereits flüssigen polymeren Vorprodukte V, Aktivatoren A oder Katalysatoren K vorgesehen sein. Diese Zuführvorrichtungen sind in den Zeichnungen nicht dargestellt.

Grundsätzlich muss in den unterschiedlichen Spritzaggregaten nicht dasselbe polymere Vorprodukt V eingebracht werden, sondern es können auch unterschiedliche polymere Vorprodukte V in die zumindest zwei Spritzaggregate eingebracht werden. Es können aber auch Mischungen polymerer Vorprodukte V in zumindest eines der Spritzaggregate eingebracht werden.

Durch die zumindest zwei Spritzaggregate ist zum einen der Vorteil gegeben, dass ein Spritzprofil gefahren werden kann. Dies ist bei Pumpen mit konstantem Vortrieb nicht möglich. Zum anderen steht bei der Verwendung von Pumpen das Material recht lange, wogegen mit der vorliegenden Erfindung das Material relativ kühl in den Einfülltrichter 15 gegeben werden kann und nur bei Bedarf aufplastifiziert wird. Es ist somit kein "Köcheln" der Grundkomponenten notwendig. Dadurch ist die Reakitivität der eingefüllten Komponenten immer garantiert. Es kann auch ein schnellerer Materialwechsel durchgeführt werden. Gegenüber Hochdruckanlagen müssen auch keine Leitungen gewaschen werden. Weiters ist die Umstellungszeit auf neue Komponenten wesentlich kürzer.

## Patentansprüche

1. Verfahren zum Herstellen von, insbesondere faserverstärkten, thermoplastischen Kunststoffteilen in einer Spritzgießmaschine (3), wobei das Verfahren das Zusammenführen eines polymeren Vorprodukts (V), eines Aktivators (A) und eines Katalysators (K) beinhaltet, wobei die Spritzgießmaschine (3) eine erste Plastifizierschnecke (1) und eine zweite Plastifizierschnecke (2), die jeweils in einem Plastifizierzylinder (18) angeordnet sind, aufweist, wobei mit der ersten Plastifizierschnecke (1) das polymere Vorprodukt (V) und der Aktivator (A) ohne Hinzufügen des Katalysators (K) vermischt und im Wesentlichen verflüssigt werden und mit der zweiten Plastifizierschnecke (2) das polymere Vorprodukt (V) und der Katalysator (K) ohne Hinzufügen des Aktivators (A) vermischt und im Wesentlichen verflüssigt werden, wonach die mit den beiden Plastifizierschnecken (1, 2) verflüssigten Inhalte (VK, VA) vermischt und gemeinsam in eine Spritzgießform (4) eingebracht werden und im Wesentlichen erst dort zum Kunststoffteil polymerisieren, wobei die Vermischung der Inhalte (VA, VK) in einer in der Spritzgießform (4) angeordneten Mischkammer (5) durchgeführt wird.

2. Verfahren nach Anspruch 1, **dadurch gekennzeichnet, dass** das Einbringen des polymeren Vorprodukts (V) samt Katalysator (K) und Aktivator (A) in die Spritzgießform (4) durch Vorschub beider Plastifizierschnecken (1, 2) durchgeführt wird.

3. Verfahren nach Anspruch 1 oder 2, **dadurch gekennzeichnet, dass** der Aktivator (A) dem polymeren Vorprodukt (V) vor dem Einfüllen zur ersten Plastifizierschnecke (1) zugegeben wird.

4. Verfahren nach einem der Ansprüche 1 bis 3, **dadurch gekennzeichnet, dass** der Katalysator (K) dem polymeren Vorprodukt (V) vor dem Einfüllen zur zweiten Plastifizierschnecke (2) zugegeben wird.

5. Verfahren nach einem der Ansprüche 1 bis 4, **dadurch gekennzeichnet, dass** als polymeres Vorprodukt ε-Caprolactam und/oder Laurinlactam oder zyklisches Butylenterephthalat verwendet wird.

6. Verfahren nach einem der Ansprüche 1 bis 5, **dadurch gekennzeichnet, dass** in der Spritzgießform (4) vor dem Einspritzen eine zu umspritzende Komponente (6), vorzugsweise ein textiles Flächengebilde oder Ähnliches, angeordnet wird, welche nach dem Einspritzen und dem Polymerisieren des eingespritzten polymeren Vorprodukts (V) samt Aktivator (A) und Katalysator (K) ein faserverstärktes Kunststoffteil mitbildet.

7. Verfahren nach einem der Ansprüche 1 bis 6, **dadurch gekennzeichnet, dass** zumindest zwei Plastifizierschnecken (1, 2) eingesetzt werden, die in einem Winkel (ε) zwischen 7° und 50°, vorzugsweise zwischen 10° und 35°, gegenüber der Horizontalen geneigt angeordnet sind.

## Claims

1. A process for the production of in particular fiber-reinforced thermoplastic parts in an injection molding machine (3), wherein the process includes bringing together a polymeric precursor (V), an activator (A) and a catalyst (K), wherein the injection molding machine (3) has a first plasticising screw (1) and a second plasticising screw (2) respectively arranged in a plasticising cylinder (18), wherein the polymeric precursor (V) and the activator (A) are mixed with the first plasticising screw (1) without addition of the catalyst (K) and are substantially liquefied and the polymeric precursor (V) and the catalyst (K) are mixed with the second plasticising screw (2) without addition of the activator (A) and are substantially liquefied, whereupon the contents (VK, VA) liquefied with the two plasticising screws (1, 2) are mixed and jointly introduced into an injection molding mold (4) and substantially only there polymerised to afford the plastic part, wherein the mixing of the contents (VA, VK) is effected in a mixing chamber (5) arranged in the injection molding mold (4).

2. A process as set forth in claim 1 **characterised in that** introduction of the polymeric precursor (V) together with catalyst (K) and activator (A) into the injection molding mold (4) is effected by advance of both plasticising screws (1, 2).

3. A process as set forth in claim 1 or 2 **characterised in that** the activator (A) is added to the polymeric precursor (V) prior to filling to the first plasticising screw (1).

4. A process as set forth in one of claims 1 through 3 **characterised in that** the catalyst (K) is added to the polymeric precursor (V) prior to filling to the second plasticising screw (2).

5. A process as set forth in one of claims 1 through 4 **characterised in that** ε-caprolactam and/or laurolactam or cyclic butylene terephthalate is used as the polymeric precursor.

6. A process as set forth in one of claims 1 through 5 **characterised in that** arranged in the injection molding mold (4) prior to the injection operation is a component (6) which is to have material injected therearound, preferably a flat textile article or the like, which after the injection operation and polymerisation of the injected polymeric precursor (V) together with activator (A) and catalyst (K) also forms a fiber-reinforced plastic part.

7. A process as set forth in one of claims 1 through 6 **characterised in that** at least two plasticising screws (1, 2) are used, which are arranged inclinedly relative to the horizontal at an angle (α) of between 7° and 50°, preferably between 10° and 35°.

## Revendications

1. Procédé pour fabriquer des pièces en matière synthétique thermoplastiques, en particulier renforcées par fibres, dans une machine de moulage par injection (3), dans lequel le procédé comporte la fusion d'un précurseur polymère (V), d'un activateur (A) et d'un catalyseur (K), dans lequel la machine de moulage par injection (3) présente une première vis préplastificatrice (1) et une deuxième vis préplastificatrice (2) qui sont disposées à chaque fois dans un cylindre préplastificateur (18), dans lequel avec la première vis préplastificatrice (1), le précurseur polymère (V) et l'activateur (A) sont mélangés sans ajout du catalyseur (K) et sont essentiellement liquéfiés et avec la deuxième vis préplastificatrice, le précurseur polymère (V) et le catalyseur (K) sont mélangés sans ajout de l'activateur (A) et sont essentiellement liquéfiés, à la suite de quoi les contenus (VK, VA) liquéfiés avec les deux vis préplastificatrices (1, 2) sont mélangés et introduits ensemble dans un moule pour coulage par injection (4) et, essentiellement uniquement là, se polymérisent en une pièce en matière synthétique, dans lequel le mélange des contenus (VA, VK) est réalisé dans une chambre de mélange (5) disposée dans le moule pour coulage par injection (4).

2. Procédé selon la revendication 1, **caractérisé en ce que** l'introduction du précurseur polymère (V) avec le catalyseur (K) et l'activateur (A) dans le moule pour coulage par injection (4) est réalisée par avancement des deux vis préplastificatrices (1, 2).

3. Procédé selon la revendication 1 ou 2, **caractérisé en ce que** l'activateur (A) est ajouté au précurseur polymère (V) avant le versement dans la première vis préplastificatrice (1).

4. Procédé selon l'une des revendications 1 à 3, **caractérisé en ce que** le catalyseur (K) est ajouté au précurseur polymère (V) avant le versement dans la deuxième vis préplastificatrice (2).

5. Procédé selon l'une des revendications 1 à 4, **caractérisé en ce que** comme précurseur polymère est utilisé du epsilon-capro-lactame et / ou du laurine-lactame ou du téréphtalate de butylène cyclique.

6. Procédé selon l'une des revendications 1 à 5, **caractérisé en ce que** dans le moule pour coulage par injection (4) est disposé, avant l'injection, un composant à couvrir par extrusion (6), de préférence une structure plane textile ou similaire, laquelle après l'injection et la polymérisation du précurseur polymère injecté (V) avec l'activateur (A) et le catalyseur (K) constitue une pièce en matière synthétique renforcée par fibres.

7. Procédé selon l'une des revendications 1 à 6, **caractérisé en ce qu'**au moins deux vis préplastificatrices (1, 2) sont mises en place, qui sont disposées en étant inclinées par rapport à l'horizontale selon un angle (α) de 7° à 50°, de préférence de 10° à 35°.
